(19) Europäisches Patentamt

European Patent Office

Office européen des brevets

(11) **EP 1 073 041 A1**

(12) **EUROPEAN PATENT APPLICATION**

(43) Date of publication:
**31.01.2001 Bulletin 2001/05**

(51) Int Cl.$^7$: **G11B 5/708**, G11B 5/718

(21) Application number: **00306445.8**

(22) Date of filing: **28.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **28.07.1999 JP 21423199**<br><br>(71) Applicant: **TDK Corporation**<br>**Chuo-ku, Tokyo 103-8272 (JP)** | (72) Inventors:<br>• **Sasaki, Hideki**<br>**Chuo-ku, Tokyo 103-8272 (JP)**<br>• **Uchida, Masatoshi**<br>**Chuo-ku, Tokyo 103-8272 (JP)**<br><br>(74) Representative:<br>**Luckhurst, Anthony Henry William**<br>**MARKS & CLERK,**<br>**57-60 Lincoln's Inn Fields**<br>**London WC2A 3LS (GB)** |

(54) **Magnetic recording medium**

(57)   A magnetic recording medium, a magnetic layer being formed on a non-magnetic support after coating and drying thereon a binder-containing non-magnetic layer and the film thickness of the magnetic layer being no greater than 0.5 μm, wherein the Mohs hardness of the abrasive in the magnetic layer is 5 or greater, the relative polishing speed is at least 200, and at the same time the value (A) obtained by relational expression (1) between the abrasive mean particle size (D) and the magnetic layer thickness (T) is between 0.55 and 1.20. A = D/T (1). According to the invention it is possible to achieve a flexible disk-shaped magnetic recording medium with a rotation rate of at least 700 rpm for recording and playback of the medium, the magnetic recording medium also exhibiting excellent running durability and running performance, as well as high electromagnetic induction characteristics.

EP 1 073 041 A1

Printed by Jouve, 75001 PARIS (FR)

**Description**

The present invention relates to a magnetic recording medium, and more specifically it relates to a magnetic recording medium, especially a flexible disk-shaped magnetic recording medium and a tape-like magnetic recording medium, with excellent running performance and running durability.

Common coated-type magnetic recording media have a non-magnetic support on which is formed a magnetic layer comprising components such as ferromagnetic powder or inorganic additives dispersed in a binder. One such magnetic recording medium is a flexible disk-shaped magnetic recording medium in which a magnetic layer is provided on a disk-shaped flexible non-magnetic support.

Flexible disk-shaped magnetic recording media must exhibit excellent abrasion resistance and durability since the disks undergo vigorous contact with magnetic heads and liners during recording and playback. Also, with the diversification of environments in which such magnetic recording media have come to be used in recent years, a demand has been created for magnetic recording media with satisfactory durability even in environments with drastically variable temperature or humidity.

A general method for improving durability is to add an abrasives such as $\alpha$-Al$_2$O$_3$, Cr$_2$O$_3$ or SiC to the magnetic layer in the attempt to reinforce the interior of the laminated coating and improve the abrasion resistance of the coating surface.

Recent years have brought demands for further high densification of magnetic recording media, and efforts are being made to achieve maximum thinness for magnetic layers from the standpoint of medium thickness loss and self-demagnetization loss.

Greater thinness for magnetic layers often results in magnetic layer thicknesses that are smaller than the particle size of the abrasives, in the case of most currently used abrasives. In such cases it is not possible to achieve suitable polishing power due to the inappropriate abrasive particle size, and this leads to poor durability or poor electromagnetic transduction characteristics.

More specifically, when an abrasive with a larger size than the magnetic layer thickness is used as a result of thinning of the magnetic layer, inconveniences may result such as damage to the head surface by the abrasive exposed beyond the coating, or abrasion of the coating as the abrasive sheds off due to contact with the head.

On the other hand, if the abrasive is smaller than the necessary size this may result in considerable reduction in the abrasion resistance of the coating surface, leading to problems such as an insufficient reinforcing effect inside the coating.

The relationship between the magnetic layer thickness and the abrasive particle size has therefore been studied, and numerical values for the magnetic layer thickness and the abrasive particle size have been specified in Japanese Laid-open Patent Publication HEI No. 5-282658 and Japanese Laid-open Patent Publication HEI No. 8-263826. Nevertheless, since the relationship of the abrasive particle size in connection with the magnetic layer thickness is not fully understood, the abrasive particle size is often larger than the magnetic layer thickness, as explained above.

In Japanese Laid-open Patent Publication HEI No. 7-272256, No. 7-334835 and No. 10-247316, therefore, the relationship between the magnetic layer thickness and the abrasive particle size has been reduced to a parameter, thus allowing the range of the abrasive particle size with respect to the magnetic layer thickness to be clearly defined.

In recent years, however, even greater durability has been demanded for magnetic layers, and the durability achieved by specifying the magnetic layer thickness and the abrasive particle size in the form of a parameter, such as disclosed in the aforementioned publications, has become insufficient.

According to the present invention, it is possible to provide a magnetic recording medium with high durability, for which optimum abrasives can be selected for highly densified magnetic recording media.

As a result of much diligent research directed at solving the aforementioned problem, it has been found that it is possible to obtain a magnetic recording medium with high durability based on selection of the optimum abrasive even for a variable magnetic layer thickness, by specifying the abrasive particle size within a given range and also specifying the polishing power of the abrasive.

In other words, the present invention overcomes the problems described above by a magnetic recording medium, a magnetic layer being formed on a non-magnetic support after coating and drying thereon a binder-containing non-magnetic layer and the film thickness of the magnetic layer being no greater than 0.5 pm, wherein the Mohs hardness of the abrasive in the magnetic layer is 5 or greater, the relative polishing speed is at least 200, and at the same time the value (A) obtained by relational expression (1) between the abrasive mean particle size (D) and the magnetic layer thickness (T) is between 0.55 and 1.20.

$$A = D/T \qquad (1).$$

An even more preferred mode of the invention is a magnetic recording medium in which the coercivity (Hc) of the magnetic powder in the magnetic layer is from 1400 to 2600 Oe, the binder used in the non-magnetic layer includes a binder that is crosslinkable by radiation, and whereby particularly excellent running durability and running performance, as well as even higher electromagnetic transduction characteristics, can be provided by a flexible disk-shaped magnetic recording medium wherein the rotation rate of the magnetic recording medium is at least 700 rpm for recording and playback, and by a tape-like magnetic recording medium with a relative speed of the magnetic recording medium and the magnetic head during recording and playback of 1.0 m/sec or greater.

These and other objects and advantages of the present invention will become clear from the following description with reference to the accompanying drawings, wherein:

Fig. 1 is a cross-sectional view of a preferred construction of a magnetic disk according to the invention;
Fig. 2 is a cross-sectional view of an another preferred construction of a magnetic tape according to the invention; and
Fig. 3 is a graph showing the environment cycle conditions for a durability test for the invention.

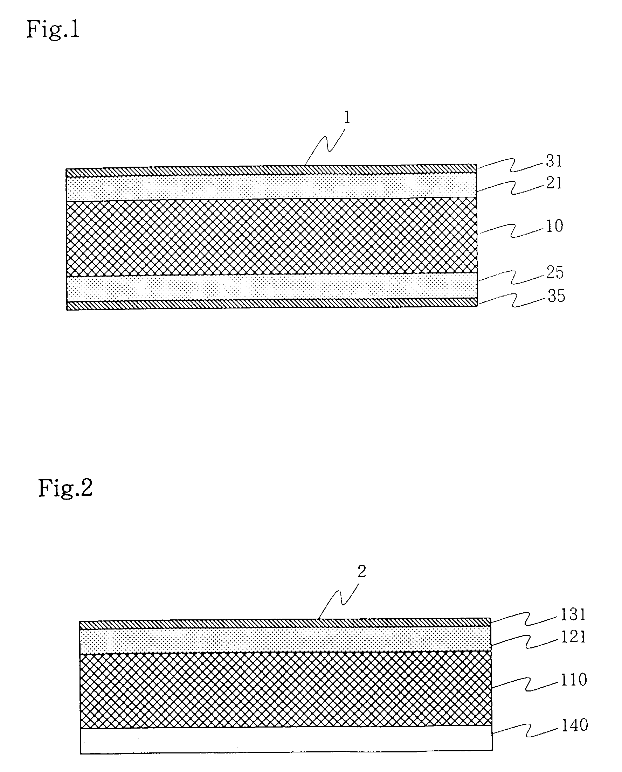

Fig. 1 shows a preferred construction of a magnetic disk 1 according to the invention. In this magnetic disk 1, non-magnetic layers 21, 25 and magnetic layers 31, 35 are formed on both surfaces of a non-magnetic support 10 in turn. Fig.2 shows an another preferred construction of a magnetic tape 2 according to the invention. In this magnetic tape 2, an non-magnetic layer 121 and a magnetic layer 131 are formed on one surface of an non-magnetic support 110 in turn and a back coat layer 140 is formed on the other surface of the non-magnetic support 110.

The relative polishing speed of the abrasive contained in the magnetic layer 31,35,131 of the magnetic recording medium according to the invention must be at least 200 in order to achieve adequate durability as a coating, and it is even more preferably at least 250.

High durability and improved signal output can be achieved if the mean particle size of the abrasive is from about 55% to 120% of the magnetic layer thickness. If the mean particle size is less than 55% thereof, the amount of abrasive exposed on the coating surface will be reduced thus lessening the effect of the abrasive addition, while if it is over 120%, the overly exposed abrasive on the coating surface may damage the head or the abrasive may shed off from the coating and damage the head or coating surface.

The Mohs hardness of the abrasive is 5 or greater, and such materials include $\alpha$-alumina, $\beta$-alumina, $\gamma$-alumina, dichromium trioxide, $\alpha$-iron oxide, $\gamma$-iron oxide, goethite, $SiO_2$, $ZnO$, $TiO_2$, $ZrO_2$, $SnO_2$ and the like, any of which may be used alone or in desired combinations.

The amount of such material to be added is preferably 5-30 parts by weight, and more preferably 10-20 parts by weight, to 100 parts by weight of the magnetic powder.

If present at less than 5 parts by weight, its effect as an abrasive will tend to be reduced. If present at greater than 30 parts by weight the polishing power of the coating surface may be too strong, possibly damaging the magnetic head depending on the kind of drive. The electromagnetic induction characteristics will also be affected because of the relatively lower content of magnetic powder.

For the binder, a thermoplastic resin, a thermosetting or heat reactive resin or a radiation sensitive modified resin may be appropriately selected for the characteristics of the medium and the production conditions, and combinations thereof may also be used.

As thermoplastic resins there may be mentioned acrylic resins, polyester resins, polyurethane resins, polyamide resins, polyimide resins, phenol resins, polyvinyl alcohol resins, acetal resins, epoxy-based resins, phenoxy-based resins, polyether resins, vinyl chloride-based copolymers, acrylonitrile-butadiene-based copolymers, polyvinyl butyral, nitrocellulose, styrene-butadiene-based copolymers, polyfunctional polyesters such as polycaprolactone, polybutadiene elastomers, chlorinated rubber, acrylic rubber, isoprene rubber, epoxy-modified rubber, and the like.

As thermosetting resins there may be mentioned condensation polymerizing phenol resins, epoxy resins, polyurethane curable resins, urea resins, butyral resins, polymal resins, melamine resins, alkyd resins, silicon resins, acrylic-based reactive resins, polyamide resins, epoxy-polyamide resins, saturated polyester resins, urea formaldehyde resins, and the like.

Among the ones mentioned above, those with terminal and/or side hydroxyl groups are preferred because they facilitate crosslinking and radiation crosslinking modification using polyisocyanates as the reactive resins.

They may also contain additional terminal or side polar groups such as acidic polar groups and basic polar groups including -COOH, $-SO_3M$, $-OSO_3M$, $-OPO_3X$, $-PO_3X$, $-PO_2X$, $-N^+R_3Cl^-$, $-NR_2$, etc. (where M is hydrogen or an alkali metal such as lithium, potassium or sodium, X is a halogen ion such as fluorine, chlorine, bromine or iodine or an inorganic or organic ion, and R is hydrogen or a hydrocarbon group), or betaine; these are suitable for improving the dispersability and may be used alone or in combinations when necessary.

Most preferably used among these are combinations of vinyl chloride-based resins and urethane-based resins.

An example of a resin that may be used is a vinyl chloride-based resin with a vinyl chloride content of 60-95 wt%, at an average polymerization degree of preferably about 100-500. A urethane-based resin used with this type of vinyl chloride-based resin is particularly effective for achieving satisfactory abrasion resistance and adhesion with non-magnetic supports. Other resins may also be included in addition to these resins.

Acrylic-based double-bonds may also be introduced into these resins in order to achieve radiation sensitive modification. The content of the radiation functional group is 1-40 mole percent and preferably 10-30 mole percent of the hydroxyl component from the standpoint of production stability and radiation curability, and particularly in the case of a vinyl chloride-based copolymer, reacting the monomers to give 1-20 and preferably 2-10 functional groups per molecule can result in a radiation curing resin with excellent dispersability and curability.

As magnetic powder to be included in the magnetic layer there may be mentioned fine oxide powders of $\gamma$-$Fe_2O_3$, Co-containing $\gamma$-$Fe_2O_3$, $Fe_3O_4$, Co-containing $Fe_3O_4$, $CrO_2$, hexagonal ferrite, etc., and fine powders of metals such as Fe, Co and Ni or their alloys, iron carbide, and the like.

These magnetic powders may be selected depending on the type of magnetic recording medium in which they are to be applied, but preferred are barium ferrite, metals or alloys, iron carbide and the like, any one alone or two or more of which may be used, in a content of 50-85 wt% and preferably 55-75 wt% of the total magnetic layer.

The magnetic layer may also contain in addition to the magnetic powder, binder and abrasive, also carbon black, a lubricant, a dispersing agent and similar additives if necessary.

The coating of the invention is constructed by laminating a non-magnetic layer on a non-magnetic support and providing the magnetic layer over it. The thickness of the non-magnetic layer is preferably 0.5-3.0 µm and even more preferably 1.0-3.0 µm, since this will minimize the influence of the non-magnetic support surface, give a satisfactory surface to the magnetic recording medium, and improve the electromagnetic transduction characteristics and durability.

At thinner than 0.5 µm the durability is compromised, and at thicker than 3.0 µm the coatability is poorer, resulting in more defects and lowering the yield, and it is therefore undesirable in terms of production.

On the other hand, although the thickness of the magnetic layer may be selected as desired based on the magnetic recording system that is to be actually used, it must be no greater than 0.5 µm from the standpoint of medium thickness loss and self-demagnetization loss.

The method of coating the non-magnetic layer and magnetic layer may basically be wet-on-dry coating wherein the non-magnetic layer is coated and dried and then the magnetic layer is coated thereover. In consideration of production efficiency, however, it is more preferable to use a method in which the non-magnetic layer is formed using a radiation curing resin, and it is cured by radiation before coating the magnetic layer.

The coating means used may be such coating means as gravure coating, reverse roll coating or die nozzle coating.

According to the present invention, a magnetic recording medium, wherein a magnetic layer is formed on a non-magnetic support after coating and drying thereon a binder-containing non-magnetic layer and wherein the film thickness of the magnetic layer is no greater than 0.5 µm, employs an abrasive of such a type that when the Mohs hardness of the abrasive in the magnetic layer is 5 or greater and the relative polishing speed is at least 200, the value (A) obtained by relational expression (1) between the abrasive mean particle size (D) and the magnetic layer thickness (T)

$$A = D/T \hspace{4cm} (1).$$

is between 0.55 and 1.20; it is therefore possible to achieve a flexible disk-shaped magnetic recording medium with a rotation rate of at least 700 rpm for recording and playback of the magnetic recording medium and a tape-like magnetic recording medium with a relative speed of the magnetic recording medium and the magnetic head during recording and playback of 1.0 m/sec or greater, to thereby obtain a magnetic recording medium exhibiting excellent running durability and running performance, as well as high electromagnetic induction characteristics.

[Examples]

The present invention will now be explained in greater detail by way of examples. The relative polishing speed, running durability and abrasive mean particle size for the invention were measured by the following methods.

Measurement method for relative polishing speed: The Mn-Zn ferrite single crystal (111) face is polished with a buff while supplying a fixed amount of alumina slurry, and the degree of polishing (length) per unit of time is compared with the degree of polishing for a standard material. The result is expressed relative to 100 as the polishing speed for the standard material (alumina slurry composition: 98 parts by weight water to 2 parts by weight of material; standard material: 98 parts by weight water to 2 parts by weight of AKP20 (Sumitomo Chemicals, KK.)).

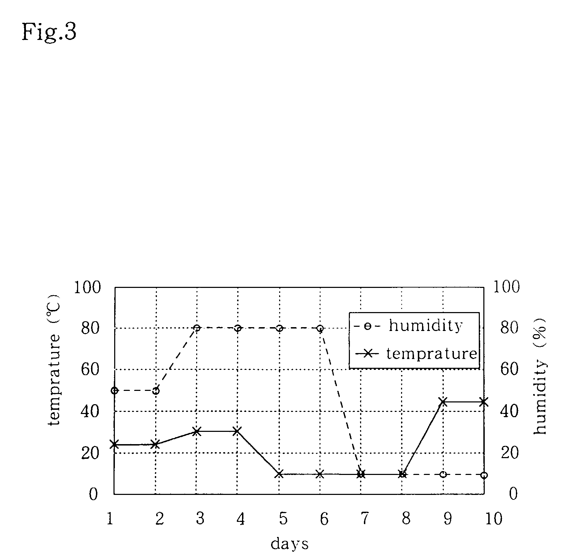

Measurement method for disk-shaped medium running durability: A disk was inserted in a ZIP drive with a rotation speed of 2940 rpm, and a random seek of the head was performed in the cycle environment shown in Fig. 3, after which the presence of any damage was confirmed visually every 100 hours and the test was terminated when damage was found.

Evaluation method for tape-like medium durability

Measurement method for running durability(DLT cassette): A Quantum DLT4000 drive was used for cycled recording and playback of a 5 m tape length in a normal temperature environment (counting 2 passes as a cycle), and the performance was judged as NG when the error rate during recording and playback reached 10 times the initial rate. The result was judged to be satisfactory when 1 million passes were cleared.

Head adhesion: After storing a tape sample in an environment of 40°C, 80% RH for 5 days, a Quantum DLT4000 drive was used for running for 1000 passes and the head adhesion after the running was confirmed with an optical microscope at 100x magnification.

Head adhesion: x
No head adhesion: o

Measurement method for running durability (8mm cassette): A Sony EV-S900 drive was used, and 200 passes running test was carried out for 50 tape samples in an environment of 0°C to confirm the presence of clogging.

No clogging: ○
Clogging: ×

Measurement method for abrasive mean particle size: A SEM was used to measure the size of 100 particles of the abrasive at a magnification of 20,000x, and the mean particle size was calculated.

Example 1

<Non-magnetic layer coating material>

- Granular $\alpha$-Fe$_2$O$_3$ (FRO-3, Sakai Chemical Industries., KK.): 55 parts by wt. (mean particle size = 30 nm, area to weight ratio (BET value) = 45 m$^2$/g)
- Carbon black (#45B, Mitsubishi Chemicals, KK.): 30 parts by wt. (mean particle size = 24 nm, BET value = 125 m$^2$/g, DBP oil absorption = 47 ml/100 g)
- $\alpha$-Al$_2$O$_3$ (AKP50, Sumitomo Chemical Industries, KK.): 15 parts by wt. (mean particle size = 0.19 $\mu$m, BET value = 8 m$^2$/g)
- Radiation sensitive vinyl chloride-based resin (TB0246, Toyobo, KK., 30% solution): 12 parts by wt. (polymerization degree: 300, polar group: -OSO$_3$K = 1.5/molecule)
- Radiation sensitive urethane-based resin (TB0242, Toyobo, KK., 35% solution): 4 parts by wt. (molecular weight = 25,000, polar group: sodium hypophosphite = 1/molecule)
- Trifunctional acrylic monomer (TA505, Sanyo Chemical Industries): 2 parts by wt.
- Isocetyl stearate: 10 parts by wt.
- Butyl stearate: 4 parts by wt.
- Methyl ethyl ketone(MEK): 126 parts by wt.
- Toluene: 38 parts by wt.
- Cyclohexanone: 38 parts by wt.

The above composition was kneaded and then dispersed with a sand grinder mill to prepare a non-magnetic layer coating material.

<Magnetic coating material 1 >

- Acicular Fe-based metal magnetic powder: 100 parts by wt. (coercivity = 1660 Oe, $\sigma_s$ = 126 emu/g, BET value =

58 m$^2$/g, mean long axis length = 0.33 μm, Fe/Co/Ni/A1=100/5/5/4(weight ratio))
- Vinyl chloride-based resin (MR110, NIPPON Zeon, KK.): 14 parts by wt. (polymerization degree = 300, polar group: -OSO$_3$K = 1.5/molecule)
- Phosphobetaine-containing polyurethane resin: 4 parts by wt. (molecular weight = 40,000, polar group density = 1.5/molecule)
- -SO$_3$Na-containing polyurethane resin: 2 parts by wt. (molecular weight = 25,000, polar group density = 1/molecule)
- Abrasive, α-Al$_2$O$_3$: 10 parts by wt. (mean particle size = 0.23 μm, BET value = 8 m$^2$/g)
- Carbon black (Sevacarb MT, Columbian carbon Co.): 3 parts by wt. (mean particle size = 350 nm, BET value = 7 m$^2$/g, DBP oil absorption = 41 ml/100 g)
- Sorbitan monostearate: 3 parts by wt.
- Isocetyl stearate: 3 parts by wt.
- Butyl stearate: 2 parts by wt.
- Methyl ethyl ketone: 250 parts by wt.
- Toluene: 80 parts by wt.
- Cyclohexanone: 80 parts by wt.

The above composition was kneaded and then dispersed with a sand grinder mill to prepare magnetic coating material 1.

First, the non-magnetic coating material was coated onto a PET film with a surface roughness (Ra) of 9 nm and a thickness of 62 μm by an extrusion die nozzle system to a post-drying film thickness of 1.5 μm, and after drying at a drying temperature of 100°C, it was exposed to radiation (5 Mrad). The other side was also coated by the same procedure to prepare a double-sided non-magnetic layer roll.

Next, 4 parts by weight of Coronate L (Nihon Polyurethane Industries, KK.) was added to magnetic coating material 1, the mixture was coated onto the aforementioned roll by an extrusion die nozzle system to a post-drying thickness of 0.3 μm, and deorientating treatment was carried out with a deorientating magnet, and after drying at a drying temperature of 100°C, it was subjected to calender treatment at a linear pressure of 300 kg/cm and a temperature of 90°C to finish the coating on one side. The other side was also coated by the same procedure to prepare a double-sided magnetic layer master roll.

The master roll was punched into a disk shape and heat cured at 70°C for 24 hours to fabricate a disk. The relative polishing speed for the abrasive used in the magnetic layer was 450, the relation D/T between the abrasive mean particle size (D) and the magnetic layer thickness (T) was 0.77, and the fabricated magnetic recording medium exhibited excellent running durability.

Example 2

A disk was fabricated in the same manner as Example 1, except that an abrasive (mean particle size: 0.19 μm, relative polishing speed: 600) was used as the abrasive of the magnetic coating material 1. The relative polishing speed for the abrasive used was 600, the relation D/T between the abrasive mean particle size (D) and the magnetic layer thickness (T) was 0.63, and the fabricated magnetic recording medium exhibited excellent running durability.

Comparative Example 1

A disk was fabricated in the same manner as Example 1, except that an abrasive (mean particle size: 0.35 μm, relative polishing speed: 80) was used as the abrasive of the magnetic coating material 1. The abrasive used had a relation D/T between the abrasive mean particle size (D) and the magnetic layer thickness (T) of 1.16, but the relative polishing speed was 80 and therefore the fabricated magnetic recording medium exhibited inadequate running durability.

Comparative Example 2

A disk was fabricated in the same manner as Example 1, except that an abrasive (mean particle size: 0.23 pm, relative polishing speed: 50) was used as the abrasive of the magnetic coating material 1. The abrasive used had a relation D/T between the abrasive mean particle size (D) and the magnetic layer thickness (T) of 0.77, but the relative polishing speed was 50 and therefore the fabricated magnetic recording medium exhibited inadequate running durability.

Comparative Example 3

A disk was fabricated in the same manner as Example 1, except that an abrasive (mean particle size: 0.19 pm, relative polishing speed: 170) was used as the abrasive of the magnetic coating material 1. The abrasive used had a relation D/T between the abrasive mean particle size (D) and the magnetic layer thickness (T) of 0.63, but the relative polishing speed was 170 and therefore the fabricated magnetic recording medium exhibited inadequate running durability.

Comparative Example 4

A disk was fabricated in the same manner as Example 1, except that an abrasive (mean particle size: 0.14 $\mu$m, relative polishing speed: 420) was used as the abrasive of the magnetic coating material 1. Although the relative polishing speed of the material used was 420, the relation D/T between the abrasive mean particle size (D) and the magnetic layer thickness (T) was 0.46, and therefore the fabricated magnetic recording medium exhibited inadequate running durability.

Example 3

<Magnetic coating material 2>

·   Acicular Fe-based metal magnetic powder: 100 parts by wt. (coercivity = 2400 Oe, $\sigma_s$= 143 emu/g, BET value = 51 m$^2$/g, pH = 10, mean long axis length = 0.1 $\mu$m, Fe/Co/Al/Y = 100/30/5/5 (weight ratio))
·   Vinyl chloride-based resin (MR110, NIPPON Zeon, KK.): 14 parts by wt. (polymerization degree = 300, polar group: -OSO$_3$K = 1.5/molecule)
·   Phosphobetaine-containing polyurethane resin: 4 parts by wt. (molecular weight = 40,000, polar group density = 1.5/molecule)
·   -SO$_3$Na-containing polyurethane resin: 2 parts by wt. (molecular weight = 25,000, polar group density = 1/molecule)
·   Abrasive, $\alpha$ -Al$_2$O$_3$: 10 parts by wt. (mean particle size = 0.14 $\mu$m, BET value = 17 m$^2$/g)
·   Carbon black (Sevacarb MT, Columbian carbon Co.): 3 parts by wt. (mean particle size = 350 nm, BET value = 7 m$^2$/g, DBP oil absorption = 41 ml/100 g)
·   Sorbitan monostearate: 3 parts by wt.
·   Isocetyl stearate: 3 parts by wt.
·   Butyl stearate: 2 parts by wt.
·   Methyl ethyl ketone: 250 parts by wt.
·   Toluene: 80 parts by wt.
·   Cyclohexanone: 80 parts by wt.

The above composition was kneaded and then dispersed with a sand grinder mill to prepare magnetic coating material 2.
First, the same non-magnetic coating material as Example 1 was coated onto a PET film with a surface roughness (Ra) of 9 nm and a thickness of 62 $\mu$m by an extrusion die nozzle system to a post-drying film thickness of 1.5 $\mu$m, and after drying at 100°C, it was exposed to radiation (5 Mrad). The other side was also coated in the same manner to prepare a double-sided non-magnetic layer roll.
Next, 4 parts by weight of Coronate L (Nihon Polyurethane Industries, KK.) was added to magnetic coating material 2, the mixture was coated onto the aforementioned roll by an extrusion die nozzle system to a post-drying thickness of 0.2 $\mu$m, and deorientating treatment was carried out with a deorientating magnet, and after drying at 100°C, it was subjected to calender treatment at a linear pressure of 300 kg/cm and a temperature of 90°C to finish the coating on one side. The other side was also coated in the same manner to prepare a double-sided magnetic layer master roll.
The master roll was punched into a disk shape and heat cured at 70°C for 24 hours to fabricate a disk. The relative polishing speed for the abrasive used in the magnetic layer was 420, the relation D/T between the abrasive mean particle size (D) and the magnetic layer thickness (T) was 0.70, and the fabricated magnetic recording medium exhibited excellent running durability.

Example 4

A disk was fabricated in the same manner as Example 3, except that an abrasive (mean particle size: 0.12 µm, relative polishing speed: 270) was used as the abrasive of the magnetic coating material 2. The relative polishing speed of the material used was 270, the relation D/T between the abrasive mean particle size (D) and the magnetic layer thickness (T) was 0.60, and the fabricated magnetic recording medium exhibited excellent running durability.

Example 5

A disk was fabricated in the same manner as Example 3, except that an abrasive (mean particle size: 0.23 µm, relative polishing speed: 450) was used as the abrasive of the magnetic coating material 2. The relative polishing speed of the material used was 450, the relation D/T between the abrasive mean particle size (D) and the magnetic layer thickness (T) was 1.15, and the fabricated magnetic recording medium exhibited excellent running durability.

Comparative Example 5

A disk was fabricated in the same manner as Example 3, except that an abrasive (mean particle size: 0.19 µm, relative polishing speed: 170) was used as the abrasive of the magnetic coating material 2. The abrasive used had a relation D/T between the abrasive mean particle size (D) and the magnetic layer thickness (T) of 0.95, but the relative polishing speed was 170 and therefore the fabricated magnetic recording medium exhibited inadequate running durability.

Comparative Example 6

A disk was fabricated in the same manner as Example 3, except that an abrasive (mean particle size: 0.04 µm, relative polishing speed: 70) was used as the abrasive of the magnetic coating material 2. The relative polishing speed of the material used was 70 and the relation D/T between the abrasive mean particle size (D) and the magnetic layer thickness (T) was 0.20, and therefore the fabricated magnetic recording medium exhibited inadequate running durability.

Example 6

<Magnetic coating material 3>

- Barium ferrite magnetic powder: 100 parts by wt. (coercivity = 2200 Oe, $\sigma_s$ = 57 emu/g, BET value = 50 m$^2$/g, particle size = 35 nm, plate ratio = 3)
- Vinyl chloride-based resin (MR110, NIPPON Zeon, KK.): 14 parts by wt. (polymerization degree = 300, polar group: $-OSO_3K$ = 1.5/molecule)
- Phosphobetaine-containing polyurethane resin: 4 parts by wt. (molecular weight = 40,000, polar group density = 1.5/molecule)
- $-SO_3Na$-containing polyurethane resin: 2 parts by wt. (molecular weight = 25,000, polar group density = 1/molecule)
- Abrasive, $\alpha$-Al$_2$O$_3$: 10 parts by wt. (mean particle size = 0.23 µm, BET value = 8 m$^2$/g)
- Carbon black (Sevacarb MT, Columbian carbon Co.): 3 parts by wt. (mean particle size = 350 nm, BET value = 7 m$^2$/g, DBP oil absorption = 41 ml/100 g)
- Sorbitan monostearate: 3 parts by wt.
- Isocetyl stearate: 3 parts by wt.
- Butyl stearate: 2 parts by wt.
- Methyl ethyl ketone: 250 parts by wt.
- Toluene: 80 parts by wt.
- Cyclohexanone: 80 parts by wt.

The above composition was kneaded and then dispersed with a sand grinder mill to prepare magnetic coating material 3.

First, the same non-magnetic coating material as Example 1 was coated onto a PET film with a surface roughness (Ra) of 9 nm and a thickness of 62 µm by an extrusion die nozzle system to a post-drying film thickness of 1.5 µm, and after drying at 100°C, it was exposed to radiation (5 Mrad). The other side was also coated in the same manner to prepare a double-sided non-magnetic layer roll.

Next, 4 parts by weight of Coronate L (Nihon Polyurethane Industries, KK.) was added to magnetic coating material 3, the mixture was coated onto the roll by an extrusion die nozzle system to a post-drying thickness of 0.3

μm, and deorientating treatment was carried out with a deorientating magnet, and after drying at 100°C, it was subjected to calender treatment at a linear pressure of 300 kg/cm and a temperature of 90°C to form a coating on one side. The other side was also coated in the same manner to prepare a double-sided magnetic layer master roll.

The master roll was punched into a disk shape and heat cured at 70°C for 24 hours to fabricate a disk. The relative polishing speed for the abrasive used in the magnetic layer was 450, the relation D/T between the abrasive mean particle size (D) and the magnetic layer thickness (T) was 0.77, and the fabricated magnetic recording medium exhibited excellent running durability.

Example 7

A disk was fabricated in the same manner as Example 6, except that an abrasive (mean particle size: 0.12 μm, relative polishing speed: 270) was used as the abrasive of the magnetic coating material 3 and the magnetic layer thickness was changed to 0.2 μm. The relative polishing speed of the abrasive used was 270, the relation D/T between the abrasive mean particle size (D) and the magnetic layer thickness (T) was 0.60, and the fabricated magnetic recording medium exhibited excellent running durability.

Comparative Example 7

A disk was fabricated in the same manner as Example 6, except that an abrasive (mean particle size: 0.19 pm, relative polishing speed: 170) was used as the abrasive of the magnetic coating material 3. The abrasive used had a relation D/T between the abrasive mean particle size (D) and the magnetic layer thickness (T) of 0.63, but the relative polishing speed was 170 and therefore the fabricated magnetic recording medium exhibited inadequate running durability.

Comparative Example 8

A disk was fabricated in the same manner as Example 6, except that an abrasive (mean particle size: 0.14 μm, relative polishing speed: 420) was used as the abrasive of the magnetic coating material 3. The relative polishing speed of the abrasive used was 420, but the relation D/T between the abrasive mean particle size (D) and the magnetic layer thickness (T) was 0.46, and therefore the fabricated magnetic recording medium exhibited inadequate running durability.

Comparative Example 9

A disk was fabricated in the same manner as Example 6, except that an abrasive (mean particle size: 0.04 μm, relative polishing speed: 70) was used as the abrasive of the magnetic coating material 3 and the magnetic layer thickness was changed to 0.2 μm. The relative polishing speed of the abrasive used was 70 and the relation D/T between the abrasive mean particle size (D) and the magnetic layer thickness (T) was 0.20, and therefore the fabricated magnetic recording medium did not exhibit satisfactory running durability.

Example 8

<Non-magnetic layer coating material 2>

$\alpha$-$Fe_2O_3$ (DPN-250BW, Toda Industries, KK.): 80 parts by wt.
(mean short axis diameter = 28 nm, BET = 55 $m^2$/g)
Carbon black (#850B, Mitsubishi Chemicals, KK.): 20 parts by wt. (mean particle size = 16 nm, BET = 200 $m^2$/g, DBP oil absorption = 70 ml/100 g)
$\alpha$-$Al_2O_3$ (HIT60A, Sumitomo Kagaku Kogyo KK.): 5 parts by wt.
(mean particle size = 0.18 μm, BET = 12 $m^2$/g)
Radiation sensitive vinyl chloride-based resin (TB0246, Toyobo, KK., 30% solution): 16 parts by wt. (polymerization degree: 300, polar group: -$OSO_3K$ = 1.5/molecule)
Radiation sensitive urethane-based resin (TB0242, TOYOBO, KK., 35% solution): 8 parts by wt. (molecular weight = 25,000, polar group: sodium hypophosphite = 1/molecule)
Trifunctional acrylic monomer (TA505, Sanyo Chemical Industries, KK.): 4 parts by wt. MEK: 120 parts by wt.
Toluene: 120 parts by wt.

Cyclohexanone: 60 parts by wt.

After kneading the above composition, it was dispersed with a sand grinder mill. The following additives and solvents were then added for viscosity adjustment to prepare non-magnetic coating material 2.

Butyl stearate: 1 part by wt.
Stearic acid: 1 part by wt.
MEK: 40 parts by wt.
Toluene: 40 parts by wt.
Cyclohexanone: 40 parts by wt.

<Magnetic coating material 4>

Fe-based metal magnetic powder: 100 parts by wt.
(Coercivity = 1830 Oe, $\sigma_s$ = 130 emu/g ,BET = 57 $m^2$/g, mean long axis length = 0.10 $\mu$m, Fe/Co/Al/Y=100/10/5/2 (weight ratio))
Vinyl chloride-based copolymer (MR110, NIPPON Zeon, KK.): 10 parts by wt. (polymerization degree = 300, polar group: $-OSO_3K$ = 1.5/molecule)
$-SO_3Na$-containing polyurethane resin: 7 parts by wt.
(Mn = 25,000, polar group density = 1/molecule)
$\alpha$ -$Al_2O_3$: 12 parts by wt. (mean particle size = 0.12 $\mu$m, BET = 20 $m^2$/g)
Myristic acid: 2 parts by wt.
MEK: 90 parts by wt.
Toluene: 90 parts by wt.
Cyclohexanone: 120 parts by wt.

After kneading the above composition, it was dispersed with a sand grinder mill. The following additives and solvents were then added for viscosity adjustment to prepare magnetic coating material 4.

Butyl stearate: 1 part by wt.
Stearic acid: 1 part by wt.
MEK: 110 parts by wt.
Toluene: 110 parts by wt.
Cyclohexanone: 160 parts by wt.

<Back coat coating material>

Carbon black: 80 parts by wt.
(Conductex SC, Colombian Carbon Co., mean particle size = 20 nm, BET = 220 $m^2$/g) Carbon black: 1 part by wt.
(SevacarbMT, Colombian Carbon Co., mean particle size = 350 nm, BET 8 $m^2$/g)
$\alpha$ -$Fe_2O_3$ (TF100, Toda Industries, KK., mean particle size = 0.1 $\mu$m): 1 part by wt.
Vinyl chloride-vinyl acetate-vinyl alcohol copolymer: 65 parts by wt.
(Monomer weight ratio = 92:3:5, average polymerization degree: 420)
Polyester polyurethane resin (UR-8300, TOYOBO KK.): 35 parts by wt.
MEK: 260 parts by wt.
Toluene: 260 parts by wt.
Cyclohexanone: 260 parts by wt.

After kneading the above composition, it was dispersed with a sand grinder mill. The following additives and solvents were then added for viscosity adjustment. Stearic acid: 1 part by wt.

Myristic acid: 1 part by wt.
Butyl stearate: 2 parts by wt.
MEK: 210 parts by wt.

Toluene: 210 parts by wt.
Cyclohexanone: 210 parts by wt.

First, the non-magnetic coating material 2 was applied onto a 6.1 μm-thick PET film with an extrusion die nozzle system to a dry thickness of 2.0 pm, and after drying at a drying temperature of 100°C, it was subjected to calendering treatment at a temperature of 100°C and a linear pressure of 300 kg/cm and finally exposed to electron beam radiation (5 Mrad) to fabricate a non-magnetic layer master sheet. Coronate L (Nihon Polyurethane Industries, KK.) was added at 4 parts by weight to magnetic coating material 4 and at 1 part by weight to 100 parts by weight of the back coat coating material, and magnetic coating material 4 was applied onto the non-magnetic layer master sheet with an extrusion die nozzle system to a dry film thickness of 0.20 μm and oriented, and after drying the coated film at a drying temperature of 100°C, it was subjected to calendering treatment at a temperature of 100°C and a linear pressure of 300 kg/cm. Next, the back coat coating material was applied to the base side opposite the magnetic layer with an extrusion die nozzle system to a dry thickness of 0.5 μm, to fabricate a master roll.

The roll was allowed to stand for 24 hours at ordinary temperature, and after curing for 24 hours in a heating oven at 60°C, it was cut to a 1/2 inch width and inserted into a DLT cassette to make a magnetic tape sample.

The relative polishing speed of the abrasive used in the magnetic layer was 270, the relation D/T between the abrasive mean particle size (D) and the magnetic layer thickness (T) was 0.60, and the fabricated magnetic recording medium exhibited excellent running durability and head adhesion characteristics.

Example 9

A tape sample was fabricated in the same manner as Example 8, except that an abrasive (mean particle size: 0.14 μm, relative polishing speed: 420) was used as the abrasive of the magnetic coating material 4. The relative polishing speed of the abrasive used was 420, the relation D/T between the abrasive mean particle size (D) and the magnetic layer thickness (T) was 0.70, and the fabricated magnetic recording medium exhibited excellent running durability and head adhesion characteristics.

Example 10

A tape sample was fabricated in the same manner as Example 8, except that an abrasive (mean particle size: 0.19 μm, relative polishing speed: 600) was used as the abrasive of the magnetic coating material 4. The relative polishing speed of the abrasive used was 600, the relation D/T between the abrasive mean particle size (D) and the magnetic layer thickness (T) was 0.95, and the fabricated magnetic recording medium exhibited excellent running durability and head adhesion characteristics.

Example 11

A tape sample was fabricated in the same manner as Example 8, except that an abrasive (mean particle size: 0.23 μm, relative polishing speed: 450) was used as the abrasive of the magnetic coating material 4. The relative polishing speed of the abrasive used was 450, the relation D/T between the abrasive mean particle size (D) and the magnetic layer thickness (T) was 1.15, and the fabricated magnetic recording medium exhibited excellent running durability and head adhesion characteristics.

Comparative Example 10

A tape sample was fabricated in the same manner as Example 8, except that an abrasive (mean particle size: 0.19 μm, relative polishing speed: 170) was used as the abrasive of the magnetic coating material 4. The abrasive used had a relation D/T between the abrasive mean particle size (D) and the magnetic layer thickness (T) of 0.95, but the relative polishing speed was 170 and therefore the fabricated magnetic recording medium exhibited inadequate running durability and head adhesion characteristics.

Comparative Example 11

A tape sample was fabricated in the same manner as Example 8, except that an abrasive (mean particle size: 0.04 μm, relative polishing speed: 70) was used as the abrasive of the magnetic coating material 4. The relative polishing speed of the abrasive used was 70, and the relation D/T between the abrasive mean particle size (D) and the magnetic layer thickness (T) was 0.20, and therefore the fabricated magnetic recording medium exhibited inadequate running durability and head adhesion characteristics.

Comparative Example 12

A tape sample was fabricated in the same manner as Example 8, except that an abrasive (mean particle size: 0.23 µm, relative polishing speed: 50) was used as the abrasive of the magnetic coating material 4. The abrasive used had a relation D/T between the abrasive mean particle size (D) and the magnetic layer thickness (T) of 1.15, but the relative polishing speed was 50 and therefore the fabricated magnetic recording medium exhibited inadequate running durability and head adhesion characteristics.

Comparative Example 13

A tape sample was fabricated in the same manner as Example 8, except that an abrasive (mean particle size: 0.35 µm, relative polishing speed: 80) was used as the abrasive of the magnetic coating material 4. The relative polishing speed of the abrasive used was 80, and the relation D/T between the abrasive mean particle size (D) and the magnetic layer thickness (T) was 1.75, and therefore the fabricated magnetic recording medium exhibited inadequate running durability and head adhesion characteristics.

Comparative Example 14

A tape sample was fabricated in the same manner as Example 8, except that an abrasive (mean particle size: 0.36 µm, relative polishing speed: 220) was used as the abrasive of the magnetic coating material 4. The relative polishing speed of the abrasive used was 220, but the relation D/T between the abrasive mean particle size (D) and the magnetic layer thickness (T) was 1.80, and therefore the fabricated magnetic recording medium exhibited inadequate running durability and head adhesion characteristics.

Example 12

<Magnetic coating material 5>

Fe-based metal magnetic powder: 100 parts by wt.
(Coercivity = 1680 Oe, $\sigma_s$ = 125 emu/g, BET = 58 m$^2$/g, mean long axis length = 0.15 µm, Fe/Co/Ni/Al/Si = 100/5/3/4/1(weight ratio))
Vinyl chloride-based copolymer (MR110, NIPPON Zeon, KK.): 10 parts by wt. (polymerization degree = 300, polar group: -OSO$_3$K = 1.5/molecule) -SO$_3$Na-containing polyurethane resin: 7 parts by wt.
(Mn = 25,000, polar group density = 1/molecule)
$\alpha$ -Al$_2$O$_3$: 12 parts by wt. (mean particle size = 0.23 µm, the relative polishing speed =450, BET = 8 m$^2$/g)
Myristic acid: 2 parts by wt.
MEK: 90 parts by wt.
Toluene: 90 parts by wt.
Cyclohexanone: 120 parts by wt.

After kneading the above composition, it was dispersed with a sand grinder mill. The following additives and solvents were then added for viscosity adjustment to prepare magnetic coating material 5.

Butyl stearate: 1 part by wt.
Stearic acid: 1 part by wt.
MEK: 110 parts by wt.
Toluene: 110 parts by wt.
Cyclohexanone: 160 parts by wt.

First, the non-magnetic coating material 2 was applied onto a 8.0 µm-thick PET film with an extrusion die nozzle system to a dry film thickness of 2.0 µm, and after drying at a drying temperature of 100°C, it was subjected to calendering treatment at a temperature of 100°C and a linear pressure of 300 kg/cm and finally exposed to electron beam radiation (5 Mrad) to fabricate a non-magnetic layer master sheet. Coronate L (Nihon Polyurethane Industries, KK.) was added at 4 parts by weight to magnetic coating material 5 and at 1 part by weight to 100 parts by weight of the back coat coating material, and magnetic coating material was applied onto the non-magnetic layer master sheet with an extrusion die nozzle system to a dry film thickness of 0.30 µm and oriented, and after drying the coated film at a drying temperature of 100°C, it was subjected to calendering treatment at a temperature of 100°C and a linear pressure of 300 kg/cm. Next, the back coat coating material was applied to the base side opposite the magnetic layer with an extrusion die nozzle system to a dry film thickness of 0.5 µm, to fabricate a master roll.

The roll was allowed to stand for 24 hours at ordinary temperature, and after curing for 24 hours in a heating oven at 60°C, it was cut to a 8mm width and inserted into a 8mm cassette to make a magnetic tape sample.

The relative polishing speed of the abrasive used in the magnetic layer was 450, the relation D/T between the abrasive mean particle size (D) and the magnetic layer thickness (T) was 0.76, and the fabricated magnetic recording medium exhibited excellent running durability.

Example 13

A tape sample was fabricated in the same manner as Example 11, except that an abrasive (mean particle size: 0.19 µm, relative polishing speed: 600) was used as the abrasive of the magnetic coating material 5. The relative polishing speed of the abrasive used was 600, the relation D/T between the abrasive mean particle size (D) and the magnetic layer thickness (T) was 0.63, and the fabricated magnetic recording medium exhibited excellent running durability.

Example 14

A tape sample was fabricated in the same manner as Example 11, except that an abrasive (mean particle size: 0.36 µm, relative polishing speed: 220) was used as the abrasive of the magnetic coating material 5. The relative polishing speed of the abrasive used was 220, the relation D/T between the abrasive mean particle size (D) and the magnetic layer thickness (T) was 1.20, and the fabricated magnetic recording medium exhibited excellent running durability.

Comparative Example 15

A tape sample was fabricated in the same manner as Example 11, except that an abrasive (mean particle size: 0.14 pm, relative polishing speed: 420) was used as the abrasive of the magnetic coating material 5. The relative polishing speed of the abrasive used was 420, but the relation D/T between the abrasive mean particle size (D) and the magnetic layer thickness (T) was 0.46, and therefore the fabricated magnetic recording medium exhibited inadequate running durability.

Comparative Example 16

A tape sample was fabricated in the same manner as Example 11, except that an abrasive (mean particle size: 0.19 µm, relative polishing speed=170) was used as the abrasive of the magnetic coating material 5. The abrasive used had a relation D/T between the abrasive mean particle size (D) and the magnetic layer thickness (T) of 0.63, but the relative polishing speed was 170 and therefore the fabricated magnetic recording medium exhibited inadequate running durability.

Comparative Example 17

A tape sample was fabricated in the same manner as Example 11, except that an abrasive (mean particle size: 0.23 µm, relative polishing speed: 50) was used as the abrasive of the magnetic coating material 5. The relation D/T between the abrasive mean particle size (D) and the magnetic layer thickness (T) was0.76, but the relative polishing speed of the abrasive used was 50, and therefore the fabricated magnetic recording medium exhibited inadequate running durability .

Comparative Example 18

A tape sample was fabricated in the same manner as Example 11, except that an abrasive (mean particle size: 0.46 µm, relative polishing speed: 380) was used as the abrasive of the magnetic coating material 5. The relative polishing speed of the abrasive used was 380, but the relation D/T between the abrasive mean particle size (D) and the magnetic layer thickness (T) was 1.53, and therefore the fabricated magnetic recording medium exhibited inadequate running durability .

Comparative Example 19

A tape sample was fabricated in the same manner as Example 11, except that an abrasive (mean particle size: 0.57 µm, relative polishing speed: 150) was used as the abrasive of the magnetic coating material 5. The relation D/T between the abrasive mean particle size (D) and the magnetic layer thickness (T) was 1.90, and the relative polishing speed of the abrasive used was 150, and therefore the fabricated magnetic recording medium exhibited inadequate running durability .

The obtained results are shown in the following Tables 1-4.

Table 1

|  | Example 1 | Example 2 | Example 3 | Example 4 | Example 5 | Example 6 | Example 7 |
|---|---|---|---|---|---|---|---|
| Mean particle size(µm):D | 0.23 | 0.19 | 0.14 | 0.12 | 0.23 | 0.23 | 0.12 |
| Relative polishing speed | 450 | 600 | 420 | 270 | 450 | 450 | 270 |
| Magnetic layer thickness (µm):T | 0.3 | 0.3 | 0.2 | 0.2 | 0.2 | 0.3 | 0.2 |
| A=D/T | 0.77 | 0.63 | 0.7 | 0.60 | 1.15 | 0.77 | 0.60 |
| Running durability (hr) | 1850 | 1900 | 2000 | 1900 | 1500 | 1900 | 1900 |

Table 2

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Mean particle size (µm):D | 0.35 | 0.23 | 0.19 | 0.14 | 0.19 | 0.04 | 0.19 | 0.14 | 0.04 |
| Relative polishing speed | 80 | 50 | 170 | 420 | 170 | 70 | 170 | 420 | 70 |
| Magnetic layer thickness (µm):T | 0.3 | 0.3 | 0.3 | 0.3 | 0.2 | 0.2 | 0.3 | 0.3 | 0.2 |
| A=D/T | 1.16 | 0.77 | 0.63 | 0.46 | 0.95 | 0.2 | 0.63 | 0.46 | 0.2 |
| Running durability (hr) | 600 | 400 | 400 | 500 | 600 | 300 | 500 | 400 | 400 |

Table 3

| | Example 8 | Example 9 | Example 10 | Example 11 | Comparative Example 10 | Comparative Example 11 | Comparative Example 12 | Comparative Example 13 | Comparative Example 14 |
|---|---|---|---|---|---|---|---|---|---|
| Mean particle size(μm):D | 0.12 | 0.14 | 0.19 | 0.23 | 0.19 | 0.04 | 0.23 | 0.35 | 0.36 |
| Relative polishing speed | 270 | 420 | 600 | 450 | 170 | 70 | 50 | 80 | 220 |
| Magnetic layer thickness (μm):T | 0.2 | 0.2 | 0.2 | 0.2 | 0.2 | 0.2 | 0.2 | 0.2 | 0.2 |
| A=D/T | 0.6 | 0.7 | 0.95 | 1.15 | 0.95 | 0.2 | 1.15 | 1.75 | 1.8 |
| Running durability (×10000passes) | 100 OK | 100 OK | 100 OK | 100 OK | 50 | 5 | 20 | 20 | 30 |
| head adhesion | ○ | ○ | ○ | ○ | × | × | × | × | × |

EP 1 073 041 A1

Table 4

| | Example 12 | Example 13 | Example 14 | Comparative Example 15 | Comparative Example 16 | Comparative Example 17 | Comparative Example 18 | Comparative Example 19 |
|---|---|---|---|---|---|---|---|---|
| Mean particle size(μm):D | 0.23 | 0.19 | 0.36 | 0.14 | 0.19 | 0.23 | 0.46 | 0.57 |
| Relative polishing speed | 450 | 600 | 220 | 420 | 170 | 50 | 380 | 150 |
| Magnetic layer thickness (μm):T | 0.3 | 0.3 | 0.3 | 0.3 | 0.3 | 0.3 | 0.3 | 0.3 |
| A=D/T | 0.76 | 0.63 | 1.20 | 0.46 | 0.63 | 0.76 | 1.53 | 1.90 |
| Running durability (clogging) | ○ | ○ | ○ | × | × | × | × | × |

While there has been described what are at present considered to be preferred embodiments of the present invention, it will be understood that various modifications may be made thereto, and it is intended that the appended claims cover all such modifications as fall within the true spirit and scope of the invention.

**Claims**

1. A magnetic recording medium, a magnetic layer being formed on a non-magnetic support after coating and drying thereon a binder-containing non-magnetic layer and the thickness of said magnetic layer being no greater than 0.5 μm, wherein the Mohs hardness of the abrasives in the magnetic layer is 5 or greater, the relative polishing speed is at least 200, and at the same time the value (A) obtained by relational expression (1) between the abrasives mean particle size (D) and the magnetic layer thickness (T) is between 0.55 and 1.20.

$$A = D/T \tag{1}$$

2. A magnetic recording medium according to claim 1, wherein the coercivity (Hc) of the magnetic powder in said magnetic layer is from 1400 to 2600 Oe.

3. A magnetic recording medium according to claim 1, wherein the binder used in said non-magnetic layer includes a binder that is crosslinkable by radiation.

4. A magnetic recording medium according to any of claims 1 to 3, which is a flexible disk-shaped magnetic recording medium with a rotation rate of at least 700 rpm during recording and playback.

5. A magnetic recording medium according to any of claims 1 to 3, which is a tape-like magnetic recording medium with a relative speed of the magnetic recording medium and the magnetic head during recording and playback of 1.0 m/sec or greater.

Fig.1

31
21
10
25
35

1

Fig.2

131
121
110
140

2

Fig.3

**European Patent Office**

## EUROPEAN SEARCH REPORT

**Application Number**

EP 00 30 6445

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 734 015 A (TDK CORP) 25 September 1996 (1996-09-25) * claims; examples * | 1 | G11B5/708 G11B5/718 |
| D,X | PATENT ABSTRACTS OF JAPAN vol. 018, no. 074 (P-1688), 7 February 1994 (1994-02-07) & JP 05 282658 A (KONICA CORP), 29 October 1993 (1993-10-29) * abstract * | 1 | |
| X | EP 0 735 525 A (TDK CORP) 2 October 1996 (1996-10-02) * claims; examples * | 1 | |
| X | US 5 385 779 A (MIURA TOSHIHIKO ET AL) 31 January 1995 (1995-01-31) * claims; examples * | 1 | |
| D,A | PATENT ABSTRACTS OF JAPAN vol. 1998, no. 14, 31 December 1998 (1998-12-31) & JP 10 247316 A (SONY CORP), 14 September 1998 (1998-09-14) * abstract * | 1 | **TECHNICAL FIELDS SEARCHED** (Int.Cl.7) G11B |
| D,A | EP 0 675 487 A (TDK CORP) 4 October 1995 (1995-10-04) * claims; examples * | 1 | |

The present search report has been drawn up for all claims

| Place of search | Date of completion of the search | Examiner |
|---|---|---|
| THE HAGUE | 25 October 2000 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 30 6445

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2000

| Patent document cited in search report | | Publication date | Patent family member(s) | | Publication date |
|---|---|---|---|---|---|
| EP 0734015 | A | 25-09-1996 | JP 8263826 A<br>DE 69608489 D<br>US 5712028 A | | 11-10-1996<br>29-06-2000<br>27-01-1998 |
| JP 05282658 | A | 29-10-1993 | NONE | | |
| EP 0735525 | A | 02-10-1996 | JP 8329448 A<br>US 5906885 A | | 13-12-1996<br>25-05-1999 |
| US 5385779 | A | 31-01-1995 | JP 2929403 B<br>JP 6060360 A | | 03-08-1999<br>04-03-1994 |
| JP 10247316 | A | 14-09-1998 | NONE | | |
| EP 0675487 | A | 04-10-1995 | JP 7272256 A<br>DE 69503282 D<br>DE 69503282 T<br>US 5567502 A | | 20-10-1995<br>13-08-1998<br>17-12-1998<br>22-10-1996 |

EPO FORM P0459

For more details about this annex : see Official Journal of the European Patent Office, No. 12/82